Europäisches Patentamt

European Patent Office

Office européen des brevets

(19)

(11) Publication number: **0 004 745**

**A1**

(12)

# EUROPEAN PATENT APPLICATION

(21) Application number: **79300506.7**

(22) Date of filing: **28.03.79**

(51) Int. Cl.²: **C 01 B 17/68**

(30) Priority: **07.04.78 GB 1382178**

(43) Date of publication of application:
**17.10.79 Bulletin 79/21**

(84) Designated Contracting States:
**BE DE FR IT NL**

(71) Applicant: **BOC Limited**
**Hammersmith House**
**London W6 9DX(GB)**

(72) Inventor: **Blakey, Philip Gary**
**20 Chestnut Avenue**
**Riddings Derbyshire(GB)**

(72) Inventor: **Smith, Bryan Keith**
**2 Viggory Cottages Viggory Lane Horsell**
**Woking Surrey(GB)**

(74) Representative: **Wickham, Michael et al,**
**c/o Patent and Trademark Department BOC Limited**
**Hammersmith House**
**London W6 9DX(GB)**

(54) Process for the catalytic oxidation of sulphur dioxide to form sulphur trioxide.

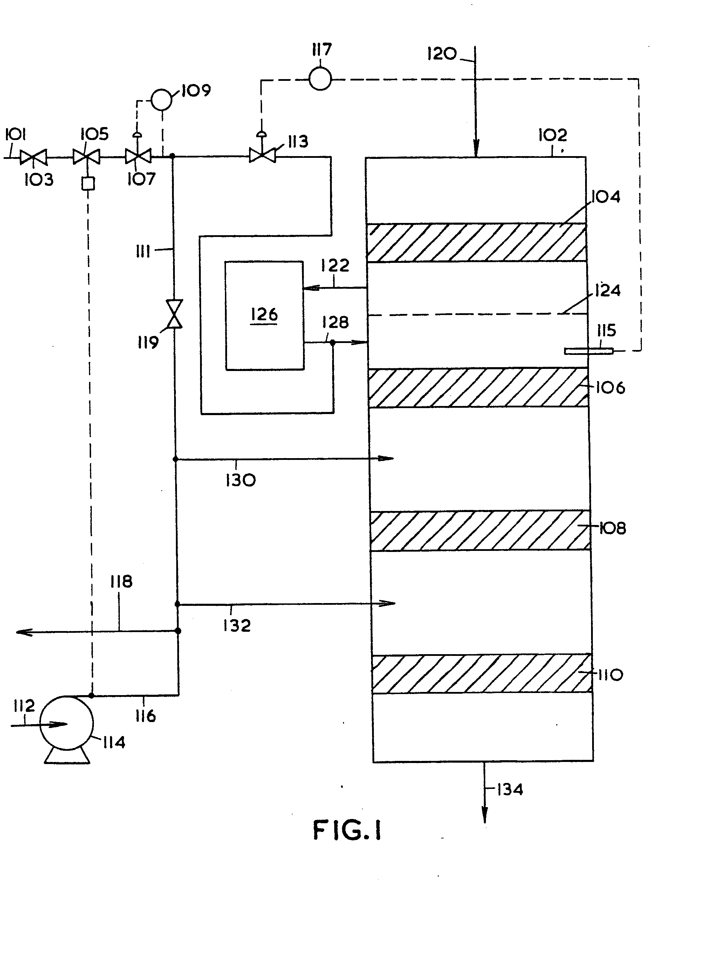

(57) In a process for the catalytic oxidation of sulphur dioxide to sulphur trioxide, an improvement is made possible by introducing commercially pure oxygen at a temperature below 0°C into the process. With reference to Figure 1 of the drawings, a hot gas mixture including sulphur dioxide and oxygen flows from a pipeline (120) into a catalytic converter (102) having four successive catalyst layers (104, 106, 108 and 110). As it flows over each catalyst layer so more of the sulphur dioxide is converted to sulphur trioxide. The gas mixture after having passed over catalyst layer (104) is cooled in an interstage heat exchanger (126). The gas mixture leaving the heat exchanger (126) has liquid oxygen added to it in a pipeline (128). The gas mixture then passes over the second catalyst layer (108). Its temperature just upstream of the catalyst layer (106) is sensed by temperature sensor (115) which is used to control the setting of a valve (113) in a liquid oxygen supply pipeline (101) such that the temperature of the gas mixture is maintained at or above the ignition temperature of the catalyst in the second layer (106).

FIG.1

0004745

TITLE MODIFIED
see front page

-1-

## Catalytic Oxidation Process

This invention relates to a catalytic oxidation process. The process is the catalytic oxidation of sulphur dioxide to sulphur trioxide. If desired, sulphuric acid may then be formed by adsorbing sulphur trioxide and concentrated sulphuric acid. The invention also relates to the manufacture of sulphuric acid.

A typical existing commercial plant for the manufacture of sulphuric acid involves the steps of forming a gas mixture including sulphur dioxide and oxygen, for example, by burning sulphur or roasting a sulphur-containing material, causing the oxygen and sulphur dioxide to react together by passing the gas mixture at elevated temperature over successive trays of catalyst until most of the sulphur dioxide has been converted to sulphur trioxide, and then absorbing the sulphur trioxide in the concentrated sulphuric acid.

In such plants there are inevitably limits on the rate of production of sulphuric acid, and the conversion efficiency of sulphur dioxide to sulphur trioxide.

The invention aims at providing an improved process for the catalytic oxidation of sulphur dioxide which makes it possible for the conversion efficiency of sulphur dioxide to sulphur trioxide to be improved, or a related advantage to be obtained.

According to the present invention there is provided a process for the catalytic oxidation of sulphur dioxide, in which process a gas mixture which includes sulphur dioxide and oxygen and which is at elevated temperature is passed successively through a number of catalytic stages so to form sulphur trioxide by reaction between sulphur dioxide and oxygen; and the gas mixture is cooled between stages, commercially pure oxygen or oxygen-enriched air is introduced into the gas mixture and the gas mixture is cooled downstream of the catalyst in each stage by cooling medium other than the commercial oxygen or oxygen-enriched air being introduced at a temperature of $0^{\circ}C$ or below into the gas mixture and/or being brought at a temperature of $0^{\circ}C$ or below, into heat exchange relationship with the gas mixture and/or the aforesaid cooling medium.

In general, no additional advantage can be obtained by bringing the cold commercial oxygen or oxygen-enriched air into heat exchange relationship with the gas mixture and/or the aforesaid cooling medium before introducing the cold commercial oxygen or oxygen-enriched air into the gas mixture. Usually, it is simply preferred to introduce the cold commercial oxygen or oxygen-enriched air into the gas mixture without first performing any such heat exchange. There is however, an exception to this. If the cooling medium is air and if, as in conventional plants, it is mixed with the gas mixture before a chosen stage, it is convenient to add the cold commercial oxygen or cold oxygen-enriched air to such air.

By the term "commercial oxygen" or "commercially pure oxygen" as used herein is meant gas mixture containing at least 90% by volume of oxygen, or pure oxygen itself.

Commercial oxygen is readily available in the liquid state. Liquid oxygen has a boiling point of minus $183^{\circ}C$ at normal pressures. Thus, if the source of the commercial oxygen is liquid oxygen, it can be obtained at a temperature of approximately minus $183^{\circ}C$. Indeed, in some instances, at least, it will be preferred to inject or add the oxygen to the gas mixture in liquid stage. If, however, the commercial oxygen or oxygen-enriched air is to be added in gaseous state, its temperature is preferably at or near to its boiling point at normal pressure. Preferably, such gaseous commercial oxygen or oxygen-enriched air is at a temperature of $-100^{\circ}C$ or below when it is first added to or brought into heat exchange relationships with the gas mixture and/or the cooling medium.

Preferably, the addition of the commercial oxygen or oxygen-enriched air is controlled so as to keep at a chosen temperature or within a chosen range of temperatures the gas mixture as it begins to flow over the catalytic stage immediately downstream of the location where the commercial oxygen or oxygen-enriched air is added. The chosen temperature or the minimum in the chosen range may be the ignition temperature of the catalyst or a higher temperature within $5^{\circ}C$ of such ignition temperature. It may be that to obtain a given increase in the efficiency of conversion, a given increase in the rate of production of sulphur trioxide or in the length of the period between the aforesaid operations for cleaning the (first stage) catalyst, the total rate of addition of commercial oxygen or oxygen-enriched air upstream of the chosen stage would need to be such as would reduce the temperature of the gas mixture as it begins to flow over the catalyst in that stage to below the ignition temperature of the catalyst. It is possible to overcome this problem by substituting for the catalyst in the chosen stage one having a lower ignition temperature. Alternatively, the extra commercial oxygen or oxygen-enriched air that needs to be added may be added to the gas mixture upstream of another catalytic stage.

If desired, the temperature of the gas mixture just upstream of the catalyst in the chosen stage to which the commercial oxygen or oxygen-enriched air is added may be monitored by a temperature sensor which is arranged to generate signals effective to operate a flow control valve controlling the passage of the commercial oxygen or oxygen-enriched air to the gas mixture upstream of the catalyst so as to maintain the sensed temperature at a chosen temperature or within the chosen range of temperatures.

If it is chosen to add to the commercial oxygen or oxygen-enriched air upstream of the first catalytic stage, the catalyst in this stage is preferably one having a low ignition temperature, that is an ignition temperature below $425^{\circ}C$.

The process according to the present invention may be performed on an existing single adsorption or double adsorption plant for manufacturing sulphuric acid. It is, of course, possible to build a new plant with a facility for operating the method according to the present invention.

If the available source of commercial oxygen or oxygen-enriched air is at high pressure but not at $0^{\circ}C$ or below, cold commercial oxygen or oxygen-enriched air may be generated by passing over the gas through an expansion turbine, a Joule-Thomson valve or a restricted valve or restricted orifice.

If the commercially pure oxygen or oxygen-enriched air were at ambient temperature, rather than at or below $0^{\circ}C$, advantages would still be obtained. Such advantages are described in our copending cognate UK patent applications 14441/77 and 19425/77. So that the reader need not refer to these applications, the process described in the above applications and the advantages that can be obtained are summarised below.

0004745

The aforesaid copending applications provide a process for the catalytic oxidation of sulphur dioxide in which process the gas mixture which includes sulphur dioxide and oxygen and which is at elevated temperature is passed successively through a number of catalytic stages so as to form sulphur trioxide by reaction between sulphur dioxide and oxygen; commercial oxygen or oxygen-enriched air is introduced into the gas mixture at a region downstream of the catalyst in the first catalytic stage and upstream of the catalyst in the final catalytic stage, and downstream of the catalyst in each stage the gas mixture is cooled by a cooling medium separate from the commercial oxygen or oxygen-enriched air or by being mixed with a gaseous cooling medium which acts as a carrier for the commercial oxygen or oxygen-enriched air.

Using this process it is possible to increase the conversion efficiency (of sulphur dioxide to sulphur trioxide) obtainable on an existing plant, increase the rate of production to sulphur trioxide (and hence sulphuric acid if the sulphur trioxide is subsequently converted to sulphuric acid) without a corresponding reduction in the conversion efficiency, or to maintain the rate of production of sulphur trioxide with a deteriorating first stage catalyst. It is not in general desirable to add the commercial oxygen or oxygen-enriched air to the gas mixture upstream of the first catalytic stage. Such addition would tend to have the effect of generating unmanageable quantities of heat as the sulphur dioxide reacts with the oxygen in the gas mixture over the catalyst in the first stage. Moreover, although it is preferred to add the oxygen or oxygen-enriched air between the first and second catalytic stages, in existing plants it may not be possible to add all the oxygen or oxygen-enriched air at such location as to do so would again result in the generation of more heat than the existing cooling or heat exchange plant would be capable of dealing with. In consequence, in operation of the process according to the aforesaid copending applications, it is sometimes desirable to add the oxygen or oxygen-enriched air to the gas mixture between the first and second catalytic stages and between the second and third catalytic stages.

We now believe that by adding cold oxygen or cold oxygen-enriched air to the gas mixture, it is possible to achieve a greater conversion efficiency, a greater increase in the rate of production without loss of conversion efficiency or to prolong the period between routine operations in which the plant is shut down in order to clean the catalyst. In addition, we believe that using cold oxygen makes more practical the addition of such oxygen (or oxygen-enriched air) to the gas mixture before the first catalytic stage.

The process according to the present invention is particularly useful in operating an existing plant or increasing its conversion efficiency if the heat removal capacity of that plant is limited.

0004745

The process according to the invention may make it possible to operate all stages of the catalytic converter with inlet temperatures at or close to the ignition temperatures of the respective catalysts in those stages without having to add extra cooling plant (apart from that required to provide the cold commercial oxygen or oxygen-enriched air).

The invention will now be described by way of example with reference to the accompanying drawings, of which:

Figure 1 is a schematic diagram illustrating part of a single absorption plant for producing sulphuric acid, said plant being adapted to perform the process according to the invention;

Figure 2 is a schematic diagram illustrating part of the same plant for producing sulphuric acid as shown in Figure 1, the plant being adapted in a different way to perform the process according to the invention; and

Figure 3 is a schematic diagram illustrating part of the plant for producing sulphuric acid as shown in Figures 1 and 2, the plant being adapted in a yet different way to perform the process according to the present invention, and

Figure 4 is a schematic diagram illustrating part of the plant for producing sulphuric acid as shown in Figures 1 to 3, the plant being adapted in a further different way to perform the process according to the present invention.

Referring to Figure 1 of the drawings, a single absorption plant for producing sulphuric acid has an inlet 112 for air in communication with an air compressor 114 whose outlet communicates with a pipeline 116. Another pipeline 118 leads off from the pipeline 116 to a sulphur burner (not shown). Thus, air at above ambient pressure is supplied to the sulphur burner. In the sulphur burner sulphur is burnt in air to form a gas mixture consisting essentially of sulphur dioxide, oxygen and nitrogen. This gas mixture then passes into the pipeline 120.

The pipeline 120 communicates with a catalytic converter 102. The catalytic converter 102 has four successive spaced apart layers of catalyst (or catalyst stages) 104, 106, 108, and 110. Each catalyst layer consists of trays of catalyst. The catalyst is vanadium pentoxide which is impregnated into a support material (typically silica).

Operation of the sulphur burner is typically controlled so that the gas mixture entering the catalytic converter is at a temperature of $425^{\circ}C$. As the gas mixture passes over the first catalyst 104 so some of the sulphur dioxide and oxygen in the mixture react together to form sulphur trioxide. The reaction is exothermic so that the temperature of the gas mixture increases as it flows over the first catalyst 104. After it has passed over the first catalyst 104 the gas mixture is conducted via a pipeline 122 into a heat
exchanger or steam super heater 126, therebeing a partition 124 in the converter
102 preventing the gas mixture flowing directly from the first catalyst layer
104 to the second catalyst layer 106. The exchanger 126 the gas mixture is
cooled, typically to 425°C or thereabouts, by heat exchange with steam, the
steam thus being super heated. The cooled gas mixture is returned to the
catalytic converter upstream of the second catalyst layer 106 but downstream of
the partition 124 by the pipeline 128.

As the sulphur dioxide containing gas mixture passes over the second
catalyst layer 106 so a further proportion of the sulphur dioxide it originally
contained is converted to sulphur trioxide by reaction with the oxygen. Owing
to the exothermic nature of this reaction, the temperature of the gas mixture
increases as it flows over the second catalytic layer 106. The temperature
of the gas mixture is reduced after is has passed over the second catalyst layer
106 by being mixed with air which at or near to ambient temperature. The air
may typically be at a temperature of 36°C. The air is supplied to the gas
mixture via a pipeline 130 which communicates with the aforesaid pipeline 116.
Thus the air compressor 114 supplies the air to be used as coolant as well as
the air for the sulphur burner.

The cooled gas mixture then passes over the third catalyst layer where
a further proportion of the sulphur dioxide in the original gas mixture is
converted to sulphur trioxide by reaction with oxygen. As a consequence the
temperature of the gas mixture rises. The gas mixture is reduced in temperature
again after it has passed over the catalyst layer 108 by being cooled by being
mixed with air passed into the converter 102 for a pipeline 132 which terminates
in the pipeline 116. Thus, the compressor 114 supplies the air for cooling
the gas mixture between the third and fourth catalyst layers. The cooled gas
mixture flows over the catalyst layer 110 and most of the remaining sulphur
dioxide is converted to sulphur trioxide by reaction with oxygen in the gas
mixture. After it has passed over the fourth catalyst layer 110 the gas mixture
consisting of nitrogen, oxygen, sulphur trioxide and a small quantity of
unconverted sulphur dioxide leaves the converter 102 from an outlet 134. The
gas mixture then passes through an economiser (not shown) into an absorber (not
shown) in which the sulphur trioxide is absorbed in sulphuric acid. The
unabsorbed gas is then vented to the atmosphere.

The process according to the present invention is performed on this part
of addition of liquid oxygen to the gas mixture in the pipeline 122 and to the
air in pipeline 130.

A vacuum-insulated liquid oxygen supply pipeline 101 terminates in the
pipeline 128. In the pipeline 101 is a stop valve 103 and downstream of the
stop valve 103 a shut-off valve 105 which is adapted to receive a signal from the air blower or compressor 114 such that if the air supply fails then the 0004745
supply of liquid oxygen is automatically stopped. There may also be as analogous
provision for stopping the supply of oxygen in the event of failure of the
sulphur pumps (not shown) which feed the sulphur burner.    Downstream of the
shut-off valve 135 is a first control valve 107. Associated with the valve 107
is a flow control device 109 which may be adjusted so as to set the total liquid
oxygen flow at a chosen indicated rate. Downstream of the valve 107 and its
associated flow control device 109 a further vacuum insulated pipeline 111
communicates at one end with pipeline 101 and at its other end with the pipeline
130.

Downstream of the union between the pipelines 101 and 111 is located a
second flow control valve 113.  The flow control valve 113 is operatively
associated with the temperature sensor 115 located immediately upstream of the
second catalyst layer 106.

The arrangement includes a temperature controller 117 which can be set to
keep the temperature sensed by the sensor 115 at or very close to a chosen
temperature by appropriately operating the valve 113 which is normally fully
open.  Thus, the controller 117 may be set to ensure that if the temperature
fell below 425$^{o}$C, the temperature is immediately increased to above 425$^{o}$C.
It is to be appreciated that the temperature will fall below 425$^{o}$C only in
the event of a failure of the valve 107, a reduction in the flow rate through
the pipeline 120, or an increase in the rate at which heat is removed from the
gas mixture in the heat exchanger 126. Should the temperature fall a fractio
below 425$^{o}$C the setting of the valve 113 will automatically be adjusted so
as to decease the flow rate of liquid oxygen to compensate for the temperature
decrease. When the temperature rises again to above 425$^{o}$C the valve 113 will
return automatically to its fully open position. If there is any excess liquid
oxygen, it will flow from the pipeline 111 into the pipeline 130 and will become
mixed with the air in the pipeline 130. The amount of liquid oxygen that enters
the pipeline 130 will depend on the setting of a manually operable control valve
119 provided in the pipeline 111.

The liquid oxygen entering the pipeline 128 will vaporise and provide extra
cooling both in the form of latent heat and sensible heat. The liquid oxygen
will rapidly evaporate because the gas mixture in the pipeline 128 will
typically be at a temperature of more than 425$^{o}$C. Similarly, liquid oxygen injected into the pipeline 130 will also evaporate rapidly providing cooling from its latent heat and sensible heat.

The addition of the liquid oxygen upstream of the second and third catalytic layers helps to increase the rate of conversion of sulphur dioxide over the second and third catalyst. This makes possible an overall increase in the conversion efficiency, or increased production at the same conversion efficiency.

It is to be appreciated that there are alternative methods and locations for injecting the commercial oxygen or oxygen-enriched air. It could be injected into the pipe 122. Alternatively, it could be injected directly into the converter 102 between the first catalyst layer 104 and the partition 124 or between the second catalyst layer 106 and the partition 124. However, with the last mentioned place of addition, there may not be sufficient time for the commercial oxygen or oxygen-enriched air to mix thoroughly with the gas mixture. It is also possible to evaporate or use the cold of the commercial oxygen or oxygen-enriched air before it is added. Thus, the liquid oxygen could possibly be passed through the steam super heater 126 separately from the gas mixture and then added to such gas mixture in the pipelines 122 or 128 or between the partition 124 and the first layer 104 (or even between the partition 124 and the second catalyst layer 126). It would also be possible to pass the liquid oxygen through a heat exchange coil embedded in the support material in the second catalyst layer 106 (or otherwise in the heat exchange relationship with such catalyst layer) However, such methods of using the cold liquid oxygen before the oxygen is added to the gas mixture are not preferred.

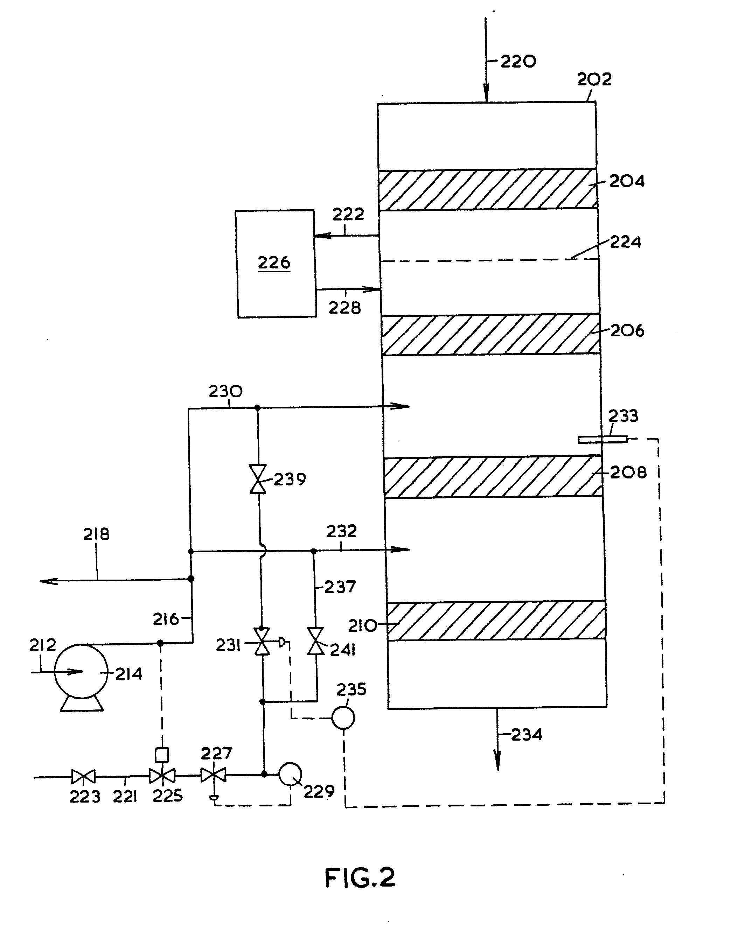

Referring now to Figure 2 of the drawings, parts identical to those shown in Figure 1 are indicated by the same reference numerals as used in Figure 1 except that such reference numerals are 100 greater (i.e. the catalytic converter is indicated by the reference 102 in Figure 1 and 202 in Figure 2).

In the plant shown in Figure 2, liquid oxygen is added to the air used to cool the gas mixture leaving the second catalyst layer and to the air used to cool the gas mixture leaving the third catalyst layer. This procedure may be advantageous if it is desired to increase the production of sulphuric acid. Such an increase in production will lead to a corresponding increase in the heat generated in the third and fourth catalytic stages. As a result extra cooling is required. This is provided by the cooling effect of the cold oxygen.

The increase in production may be achieved by increasing the concentration of sulphur dioxide in the incoming gas and replacing some of the catalyst in the first catalyst layer 204 by dummy catalyst (i.e. support material not being impregnated with catalyst).

Vacuum insulated pipeline 221 communicates with a source of liquid oxygen (not shown) in the pipeline 221 is a stop valve 223. Downstream of the stop valve 223 is a shut-off valve 225. A shut-off valve 225 is associated with the compressor 214 the arrangement being such that when the compressor 214 is shutdown so that the valve 225 is closed thereby stopping flow of liquid oxygen into the plant. There may also be an analogous provision for stopping the supply of oxygen in the event of failure of sulphur pumps (not shown) which feed the sulphur burner.

Downstream of the valve 225 is a flow control valve 227. The valve 227 is associated with a flow sensing device 229 on its downstream side. The sensing device has associated control circuits such that an indicated total flow rate for the liquid oxygen can be set and the valve 227 automatically adjusted so as to supply the liquid oxygen at this rate.

The pipeline 221 terminates in the pipeline 230. The flow control valve 231 is disposed in the pipeline 221 downstream of the valve 227 and the flow rate sensing device 229. The valve 231 is operatively associated with a temperature sensor 233 by means of a temperature controller 235. In operation, the temperature controller 235 is set to adjust automatically the setting of the valve 231  immediately upon the temperature sensed by the sensor 233 falling below 425°C, the adjustment being to reduce the rate at which the oxygen flows into the pipeline 230 and thereby return the sensed temperature without delay to above 425°C  when the sensed temperature returns to above 425°C the valve 231 will return a fully open position.

A further vacuum insulating pipeline 237 commuicates one end with the pipeline 221 at a region upstream of the valve 231 but downstream of the valve 227 and at its other end with the pipeline 232. Thus if the total requirement of liquid oxygen cannot all be mixed with the air used as a cooling medium passing through the line 230 in view  of the excessive decrease in temperature that it might cause, the plant will automatically pass the excess liquid oxygen into the air coolant passing through the line 232. Alternatively, it may be desired always to add some liquid oxygen to the cooling medium passing through the pipe 232 by opening a manually operable flow control valve 241 disposed in the pipeline 237.

A shut-off valve 239 is provided in the pipeline so as to enable the liquid oxygen to be isolated from the pieline 20 should this be desired.

In operation, therefore, liquid oxygen is injected into the air used as a cooling medium in the lines 230 and 232 thus reducing the temperature of the coolant by giving up its latent heat and sensible heat to the coolant. The addition of the oxygen makes possible an increase in the efficiency of conversion of sulphur dioxide to sulphur trioxide in the third and fourth catalytic stages.

It is to be appreciated that in the plant showing Figure 1 and Figure 2, cold oxygen gas may be used instead of liquid oxygen.

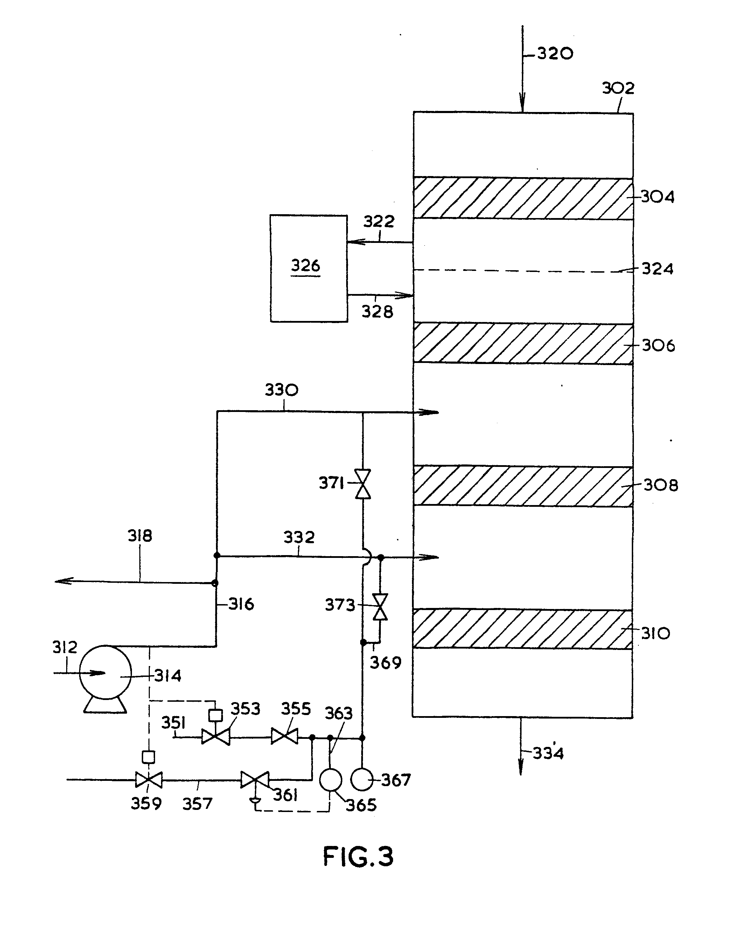

Referring to Figure 3 of the drawings, those parts of the plant identical to corresponding parts in the plant shown in Figure 1 are indicated by the same reference numerals as used in Figure 1 except that each reference numerals concerned is 220 greater than its corresponding reference numeral in Figure 1. In the plant shown in Figure 3, cold oxygen gas is added to the air used as a cooling medium downstream of the second catalyst and to the air used as a cooling medium downstream of the third catalyst.

The pipeline 351 communicates at one end of a source of gaseous oxygen under pressure and at ambient temperature and at its other end with the pipeline 330. In the pipeline 351 is located a shut-off valve 353. The shut-off valve is associated with the compressor 314 such that the shut-off valve will close if the compressor 314 is shut down. Downstream of the shut-off valve 353 is a stop valve 355. The stop valve may be used, if desired, to isolate the supply of gaseous oxygen from the union of the pipeline 351 with a pipeline 357 which communicates at its other end with a source of liquid oxygen, the source not being shown. In the pipline 357 is disposed a shut-off valve 359. The shut off valve 359 is associated with the valve 314 in the same way as is the shut-off valve 353.

Downstream of the shut-off valve 359, a flow control valve 361 is disposed in the pipeline 357. The setting of the flow control valve 361 is controlled by a temperature sensor 363 situated in the pipeline 351 downstream of its union with the pipeline 357. The temperature sensor 363 is associated with a temperature controller 365, the arrangement being such that the temperature controller is effective to adjust the setting of the valve 361 so as to maintain the sensed temperature within, say, plus or minus $1^oC$ of a chosen value. Downstream of the temperature sensor 363 is a flow indicator 367 which indicates the total flow of gas through the pipeline 367. Downstream of the flow indicator 367 the pipeline 369 communicates at one end with the pipeline 351 and at its other end with the pipeline 332. A proportioning valve 371 is located in the pipeline 369. Another proportioning valve 373 is located in the pipeline 369. The valves 371 and 383 are set so as to proportion in a chosen manner the supply of oxygen between the lines 330 and 332. If desired, supply of oxygen to either pipeline may be prevented altogether.

In operation, liquid oxygen flowing through the pipeline 357 enters the gaseous oxygen at ambient temperature in the pipeline 351 and vaporises, thereby cooling the oxygen in the pipeline 351. Typically, this oxygen may be cooled to $100^oC$ or below. The oxygen then flows into the air passing through the pipelines 330 and 332 respectively. Consequently, this air is both cooled and enriched in oxygen. As a result of this addition of oxygen the efficiency of conversion over the third and fourth catalysts is improved.

One alternative place of adding the commercial oxygen and oxygen-enriched air not described with reference to the drawings is upstream of the third catalyst. If the commercial oxygen or oxygen-enriched air is added to such a location, it is to replace the vanadium pentoxide in the first layer with the catalyst having lower ignition temperature. Vanadium pentoxide catalysts typically have an ignition temperature of just below $425^oC$. It is possible instead to use catalysts having an ignition temperature as low as $380^oC$.

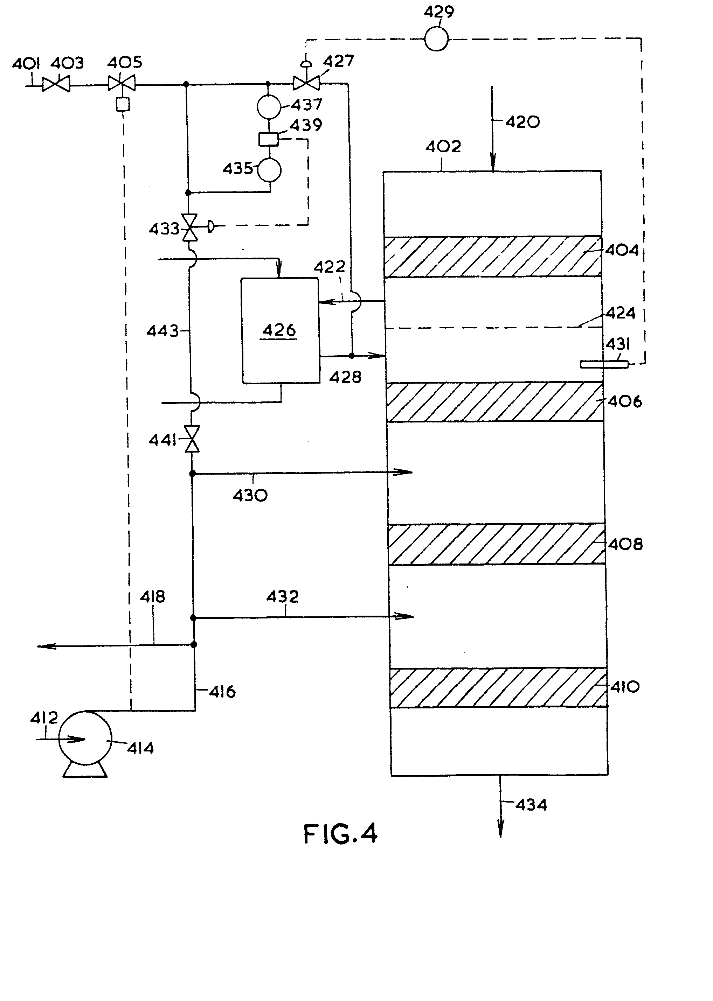

Referring to Figure 4 of the drawings, those parts of the plant identical to corresponding parts in the plant shown in Figure 1 are indicated by the same reference numerals as used in Figure 1 except that each such reference numeral is 300 greater than its corresponding reference numeral in Figure 1.

A pipeline 401 communicates at one of its ends with a source of liquid oxygen (not shown) and at its other end with the pipeline 428. In the pipeline 401 is diposed a manually operable shut off valve 403. Downstream of the valve 403 is an automatic shut off valve 405 which is operatively associated with the compressor (or blower) 414, the arrangement being such that if the compressor ceases operating the valve 405 closes automatically. The valve 405 is associated in an analogous manner with the pumps (not shown) which supply sulphur to the sulphur burner (not shown) such that if the pumps cease operating the valve 405 closes automatically.

Downstream of the valve 405 the pipeline 401 communicates with a pipeline 443 which terminates in the pipeline 430. In the pipeline 443 is disposed an automatic flow control valve 433. The flow control valve is associated with a device 435 for measuring the rate of flow of oxygen through the pipeline 443 and with a device for measuring the rate of flow of oxygen at a location in the pipeline 401 downstream of the union of that pipeline with the pipeline 443. The devices 435 and 437 are adapted to generate signals indicative of the respective flow rates. The devices 435 and 437 are associated with signal comparison device 439, which may be set to maintain a constant total rate of flow of oxygen from the source thereof (not shown) to the converter to 402. The arrangement is that the setting of the valve 433 is adjusted by signals generated by the device 439 so as to vary as necessary the rate of flow of oxygen through the pipeline 443 in order to keep constant the aforesaid total rate of flow.

A flow control valve 427 is disposed in the pipeline 401 downstream of the device 437. In normal operation of the plant the valve 427 is set to be fully open. The valve 427 is operatively associated with a temperature sensor 431 situated  downstream of the partition 424 and upstream of the second catalyst layer 406.  A temperature controller 429 is provided such that should the temperature sensed by the sensor 431 fall below a chosen value, say, 425°C it will immediately generate a signal which changes the setting of the valve 427 in such a way that the flow of liquid oxygen therethrough is reduced. Thus the sensed temperature will rise to above the chosen value, whereupon the valve will return to its fully open setting.

Thus in operation liquid oxygen (approximately 100% pure) is provided at a chosen total flow rate to the converter 402 to provide the previously mentioned advantages afforded by the invention.

If it is desired to isolate the pipeline 430 from the source of liquid oxygen a manually operable shut off valve 441 in the pipeline 443 may be closed.

It is to be appreciated that the advantage of improved efficiency and conversion (or increase in production of sulphur trioxide at the same overall conversion efficiency) arises from two factors. First, the addition of commercial of oxygen-enriched air increases the concentration of oxygen in the gas mixture. Second, the fact that the commercial oxygen or oxygen-enriched air is cold increases the conversion efficiency.

Example

This example relates to the improvement of the conversion efficiency of the $SO_2$ from 98.3% in an air dilution sulphuric acid plant, as shown in Figure 2. The gas entering the converter contains (by volume) 10% $SO_2$, 10.9% $O_2$ and 79.1% $N_2$ and is at a temperature of 425°C. The $SO_2$ in the gas is approximately 60% converted after passing through the first catalyst bed so that its exit temperature is 600°C. The gas is then cooled to 430°C before entering the 2nd catalyst bed where the $SO_2$ gas is further converted and the gas leaves this catalyst at a temperature of 520°C. In a standard plant, air would be injected at around 35°C above the third catalyst bed so that the inlet temperature is reduced to 435°C.

With the use of the standard dilution plus additional liquid commercial oxygen, the composition by volume of the gas entering the third catalyst bed is $SO_2$ 1.65%, $O_2$ 12.2%, $SO_3$ 7.54%, the remainder being $N_2$. If a low bite catalyst is installed in the third catalyst pass then all the required oxygen is injected into the pipeline 230 to reduce to 393° the temperature of the gas immediately upstream of the third catalyst. The temperature rises to around 420°C and the gas mixture passes over the fourth catalyst after mixing with the air supplied through the pipeline 232. The final $SO_2$ conversion is around 98.6%

CLAIMS

1. A process for the catalytic oxidation of sulphur dioxide, in which process a gas mixture which includes sulphur dioxide and oxygen and which is at elevated temperature is passed successively through a number of catalytic stages so as to form sulphur trioxide by reaction between sulphur trioxide and oxygen; and the gas mixture is cooled between catalytic stages, characterised in that commercially pure oxygen or oxygen-enriched air is introduced into the gas mixture and the gas mixture and the gas mixture is cooled downstream of the catalyst in each stage by cooling medium other than the commercially pure oxygen or oxygen-enriched air being introduced at a temperature of $0^{o}C$ or below into the gas mixture and/or being brought at a temperature of $0^{o}C$ or below into heat exchange relationship with the gas mixture and/or the aforesaid cooling medium.

2. A process as claimed in claim 1, characterised in that the commercially pure oxygen or oxygen-enriched air is introduced at a temperature of minus $100^{o}C$ or below into the gas mixture and/or is brought at a temperature of minus $100^{o}C$ or below into heat exchange relationship with the gas mixture and/or the aforesaid cooling medium.

3. A process as claimed in claim 1 or claim 2, characterised in that liquid oxygen is introduced into the gas mixture and/or is brought into heat exchange relationship with the gas mixture and/or the aforesaid cooling medium.

4. A process as claimed in any one of the preceding claims, characterised in that the commercially pure oxygen or oxygen-enriched air is introduced into the gas mixture as it flows through a passage connecting a heat exchanger to the converter.

5. A process as claimed in any one of claims 1 to 3, characterised in that the commercially pure oxygen or oxygen-enriched air is introduced into air which is subsequently mixed with the gas mixture to effect cooling of the gas mixture.

0004745

6. A process as claimed in any one of the preceding claims, characterised in that the introduction of the commercially pure oxygen or oxygen-enriched air into the gas mixture is controlled so as to maintain the temperature of the gas mixture as it flows over the catalyst immediately downstream of where the commercial oxygen or oxygen-enriched air is added, at the ignition temperature of the catalyst or a higher temperature within a chosen temperature range.

7. A process as claimed in claim 6, characterised in that the higher temperature is within $5^{O}C$ of the ignition temperature.

8. A process as claimed in claim 6 or claim 7, characterised in that the commercially pure oxygen or oxygen-enriched air is introduced into the gas mixture at two different locations, one upstream and the other downstream of the said catalyst and the total rate at which the commercially pure oxygen or oxygen-enriched air is introduced into the gas mixture is kept constant.

9. A process as claimed in any one of claims 6 to 8, characterised in that the temperature of the gas mixture just upstream of the said catalyst is monitored by a temperature sensor which is arranged to generate signal effective to operate a flow-control valve controlling the introduction of the commercial oxygen or oxygen-enriched air into the gas mixture upstream of the catalyst so as to maintain the sensed temperature at the ignition temperature or within the chosen range or temperatures.

10. A process as claimed in any one of claims 6 to 9, characterised in that commercially pure oxygen or oxygen-enriched air is introduced into the gas mixture downstream of the first catalytic stage and upstream of the second catalytic stage.

FIG.I

FIG.2

FIG.3

FIG.4

## European Patent Office

## EUROPEAN SEARCH REPORT

EP 79 300 506.7

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | DE - B - 1 186 837 (METALLGESELLSCHAFT) * claim 1; column 3, lines 42 to 55 * | 1,4, 6 | C 01 B 17/68 |
| | --- | | |
| | US - A - 2 180 727 (ARTER) * claim 1 * | 1,5 | |
| | --- | | |
| | DE - B - 1 060 367 (PETERSEN) * claim 2 * | 1,9 | **TECHNICAL FIELDS SEARCHED (Int.Cl.²)** C 01 B 17/00 |
| | --- | | |
| | US - A - 3 803 297 (GUTH et al.) * claims 1 to 3; column 2, lines 34 to 40; column 4, lines 47 to 49 * | 1 | |
| | --- | | |
| | US - A - 3 282 645 (MANDELIK) * claim 5, column 3, lines 1 to 8 * | 1 | **CATEGORY OF CITED DOCUMENTS** |
| | --- | | X: particularly relevant |
| A | US - A - 4 016 248 (VYDRA et al.) | | A: technological background |
| | ----- | | O: non-written disclosure |
| | | | P: intermediate document |
| | | | T: theory or principle underlying the invention |
| | | | E: conflicting application |
| | | | D: document cited in the application |
| | | | L: citation for other reasons |

X The present search report has been drawn up for all claims

&: member of the same patent family, corresponding document

| Place of search | Date of completion of the search | Examiner |
|---|---|---|
| Berlin | 14.06.1979 | KESTEN |

EPO Form 1503.1 06.78